# FASCICULE DE BREVET EUROPEEN

(11) **EP 1 785 705 B1**
(45) Date de publication et mention de la délivrance du brevet: **31.03.2010**
(21) Numéro de dépôt: 06123884.6
(22) Date de dépôt: 10.11.2006
(51) Int. Cl.: G01K 7/22

(54) **Capteur de temperature**
Temperaturfühler
Temperature sensor

(30) Priorité: 10.11.2005 FR 0553438
(43) Date de publication de la demande: 16.05.2007
(73) Titulaire: SC2N, 94017 Créteil (FR)
(72) Inventeur: Wittemberg, Vincent, 14123, IFS (FR); Le Bouquin, Dominique, 14200, Hérouville St. Clair (FR); Donatien, Sébastien, 14170, Perrières (FR); Robic, Jean-Pierre, 14000, Caen (FR); Ramond, Daniel, 14210, Evrecy (FR)
(74) Mandataire: Croonenbroek, Thomas Jakob

(56) Documents cités:
- EP-A1- 0 783 096
- FR-A- 2 783 602
- FR-A- 2 797 687

## Description

L'invention concerne un capteur de température destiné à être monté sur un convertisseur catalytique dans un système d'échappement pour véhicule automobile afin de détecter en partculier des températures anormales et ainsi par exemple la détérioration du catalyseur, etc.

Un capteur de ce type est connu du document de brevet JP-57-52834.

Ce capteur comporte un élément de thermistance, un élément de câblage connecté à l'élément de thermistance, destiné à conduire son signal et constitué de deux fils d'électrode, une poudre en matière isolante contenant les deux fils et un élément tubulaire en matière isolante recouvrant l'élément de thermistance.

Cet ensemble est contenu dans un boîtier métallique qui, dans le mode de réalisation décrit dans ce document, est constitué d'un fourreau contenant la poudre en matière isolante et d'un capuchon le fermant.

Selon un autre mode de réalisation, tel que décrit dans le document de brevet FR 2 783 602, la poudre isolante est remplacée par un corps cylindrique en matière isolante dans lequel est inséré l'élément de câblage. Dans ce cas, l'ensemble formé par l'élément de thermistance, l'élément de câblage et ce corps cylindrique peut être introduit dans un fourreau métallique fermé à son extrémité.

A ce dernier type de capteur, il peut être ajouté un élément tubulaire en matière isolante recouvrant l'élément de thermistance, le corps cylindrique et l'élément tubulaire étant aboutés l'un à l'autre par leur extrémité.

Cependant, l'insertion dans le fourreau métallique s'avère être alors relativement complexe. En effet, l'élément tubulaire n'est maintenu, lors de cette insertion, que par appui ou au mieux frottement sur l'élément de thermistance. Si l'ensemble formé par l'élément de thermistance, l'élément de câblage, le corps cylindrique et l'élément tubulaire est par exemple incliné, l'élément tubulaire peut aisément tomber.

On connaît par ailleurs dans le document JP 08 054291 un capteur de température comportant un élément de thermistance, un élément de câblage connecté à l'élément de thermistance et destiné à conduire son signal.

Le boîtier du capteur de l'état de la technique forme un corps cylindrique réalisé en une résine électriquement isolante.

Ce capteur comporte de plus un élément tubulaire formant capuchon et réalisé en alumine recouvrant ladite thermistance.

Toutefois, ce capteur semble complètement inadapté pour la mesure de température dans le cadre d'un convertisseur catalytique dans un système d'échappement d'un véhicule automobile.

En effet, un boîtier en résine ne résiste pas aux températures élevées de l'ordre de 1000°C qui règnent dans les conduits de gaz d'échappement. De plus, du fait de la différence de matériaux entre le capuchon en céramique et le boîtier en résine, ces deux parties du capteur possèdent des coefficients de dilatation différents de sorte que l'on ne peut pas réaliser une étanchéité du capteur qui est nécessaire pour son bon fonctionnement.

L'invention résout ce problème technique et, pour ce faire, elle propose un capteur de température destiné à être monté sur un convertisseur catalytique dans un système d'échappement pour véhicule automobile comportant un élément de thermistance, un élément de câblage connecté au dit élément de thermistance et destiné à conduire son signal et un corps cylindrique en matière isolante contenant ledit élément de câblage, et un fourreau métallique fermé à une de ses extrémités, caractérisé en ce qu'il comporte également un élément tubulaire en matière isolante recouvrant ledit élément de thermistance, ledit corps cylindrique et ledit élément tubulaire étant aboutés l'un à l'autre par leur extrémité et reliés l'un à l'autre par coopération de formes à leurs extrémités, l'ensemble constitué de l'élément de thermistance, de l'élément de câblage, du corps cylindrique et de l'élément tubulaire assemblés étant inséré dans le fourreau métallique.

L'invention présente donc l'avantage d'assurer un positionnement relatif de l'élément tubulaire sur le corps cylindrique et donc sur l'élément de thermistance qui soit défini et précis.

Avantageusement, ledit corps cylindrique présente au moins une rainure débouchante à sa dite extrémité et ledit élément tubulaire présente au moins une languette emboîtée dans ladite rainure.

Le corps cylindrique peut être fabriqué par moulage et frittage.

Le corps cylindrique peut être également fabriqué par extrusion et ladite rainure débouchante peut être réalisée sur toute la longueur du dit corps cylindrique.

Ledit corps cylindrique et ledit élément tubulaire sont de préférence en céramique.

Ledit élément tubulaire peut être fermé à son extrémité opposée à sa dite extrémité aboutée.

L'invention est décrite ci-après plus en détail à l'aide des figures ne représentant qu'un mode de réalisation préféré de l'invention.
La figure 1 est une vue en coupe longitudinale d'un capteur de température et la figure 2 une vue de détail de cette première figure.
La figure 3 est une vue partielle en perspective d'un capteur de température conforme à l'invention, avant assemblage.
La figure 4 est une vue partielle en perspective d'un capteur de température conforme à l'invention.

Les figures montrent un capteur de température destiné à être monté sur un convertisseur catalytique dans un système d'échappement pour véhicule automobile et donc soumis à de fortes variations de température allant de -40°C en hiver avec le moteur à l'arrêt jusqu'à plus de 1000°C lorsque le moteur fonctionne.

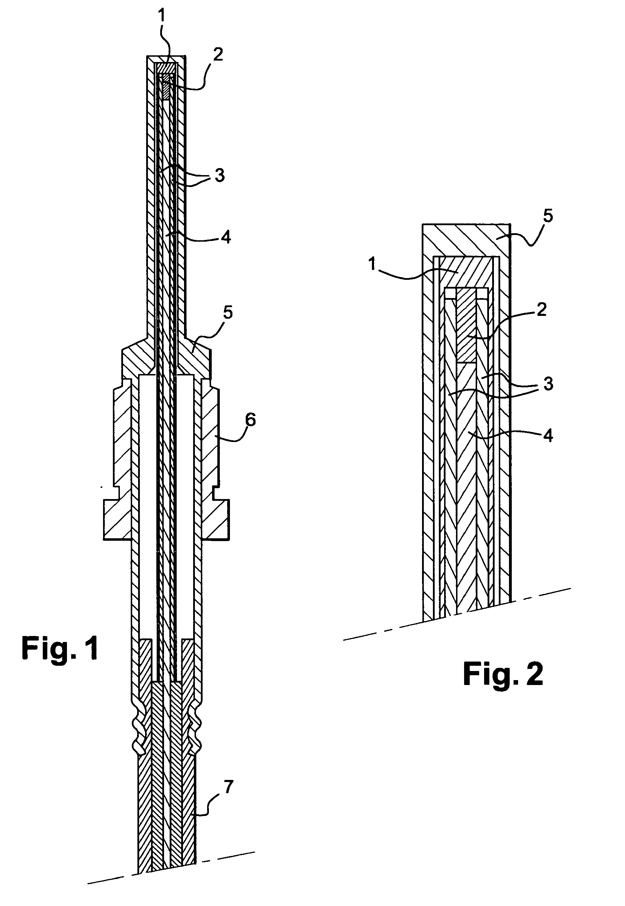

Comme visible sur les figures 1 et 2, un capteur de température comporte un élément de thermistance 2, un élément de câblage connecté au dit élément de thermistance, destiné à conduire son signal et constitué de deux fils d'électrode 3 et un corps cylindrique 4 en matière isolante, de préférence en céramique, contenant les fils 3, un élément tubulaire 1 en matière isolante, de préférence en céramique, recouvrant l'élément de thermistance 2, le corps cylindrique 4 et l'élément tubulaire 1 étant aboutés l'un à l'autre par leur extrémité et reliés l'un à l'autre, d'une façon qui sera explicité plus loin.

Cet ensemble est contenu dans un fourreau métallique 5 qui peut retenir un système de fixation, par exemple un écrou 6, afin de permettre sa fixation sur une structure support. A son extrémité ouverte, le fourreau peut être fermé par un cylindre en matière élastomère 7 assurant l'étanchéité du capteur et le passage de l'élément de câblage vers un calculateur, par exemple.

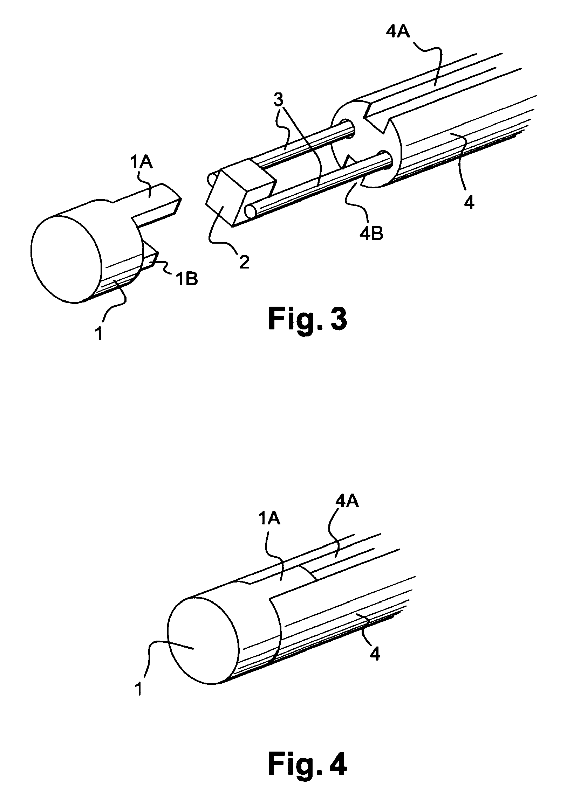

Les caractéristiques essentielles de l'invention sont visibles sur les figures 3 et 4.

Le corps cylindrique 4 et l'élément tubulaire 1 sont reliés l'un à l'autre par coopération de leur forme à leur extrémité aboutée et, selon l'exemple représenté, le corps cylindrique 4 présente au moins une rainure débouchante 4A, 4B à cette extrémité et l'élément tubulaire 1 présente au moins une languette 1A, 1B emboîtée dans cette rainure. Par exemple, ces rainures et languettes sont au nombre de deux et diamétralement opposées.

Le corps cylindrique 4 peut être fabriqué par extrusion et alors, de préférence, la rainure débouchante est réalisée sur toute la longueur du corps cylindrique.

Selon l'exemple représenté, l'élément tubulaire 1 est fermé à son extrémité opposée à son extrémité aboutée, ayant une forme de capuchon. Ce mode de réalisation est particulièrement adapté au cas où les fils d'électrode 3 ne sont pas bloqués axialement dans le corps cylindrique, par exemple lorsque les fils sont logés dans des cavités longitudinales aménagées dans le corps.

L'élément tubulaire peut également être ouvert à son extrémité opposée à son extrémité aboutée, lorsque les fils d'électrode 3 sont axialement bloqués dans le corps cylindrique 4, par exemple lorsque ce corps est surmoulé sur les fils. En effet, dans ce dernier cas, il n'est pas indispensable d'isoler l'élément de thermistance vis-à-vis de l'extrémité du fourreau métallique.

L'élément tubulaire peut présenter une cavité interne cylindrique. Avantageusement, il peut également présenter une cavité présentant des pans, telle qu'une cavité de section hexagonale, sur lesquels viennent se bloquer au moins deux faces de l'élément de thermistance. Cette variante assure que cet élément de thermistance ne puisse tourner, un fois l'élément tubulaire mis en place. De plus, elle permet de réduire le volume d'air à l'intérieur de l'élément tubulaire ce qui assure une meilleure conductivité et améliore le fonctionnement du capteur.

La coopération de forme entre le corps cylindrique et l'élément tubulaire de type capuchon assure un maintien par appui et frottement des parties emboîtées suffisant pour retenir l'élément tubulaire en place lors de l'insertion de l'ensemble constitué de l'élément de thermistance, de l'élément de câblage, du corps cylindrique et de l'élément tubulaire à l'intérieur du fourreau métallique 5. Et ceci quelle que soit la position de cet ensemble.

De plus, s'il est nécessaire d'avoir un positionnement relatif défini de l'élément tubulaire et de l'élément de thermistance, l'invention l'assure grâce à un positionnement précis des parties d'emboîtement.

## Revendications

1. Capteur de température destiné à être monté sur un convertisseur catalytique dans un système d'échappement pour véhicule automobile comportant un élément de thermistance (2), un élément de câblage (3) connecté au dit élément de thermistance et destiné à conduire son signal et un corps cylindrique en matière isolante (4) contenant ledit élément de câblage, un fourreau métallique (5) fermé à une de ses extrémités et un élément tubulaire en matière isolante (1) recouvrant ledit élément de thermistance, l'ensemble constitué de l'élément de thermistance, de l'élément de câblage, du corps cylindrique et de l'élément tubulaire assemblés étant inséré dans le fourreau métallique (5), **caractérisé en ce que** ledit corps cylindrique (4) et ledit élément tubulaire (1) étant aboutés l'un à l'autre par leur extrémité et reliés l'un à l'autre par coopération de formes à leurs extrémités.

2. Capteur selon la revendication précédente, **caractérisé en ce que** ledit corps cylindrique (4) présente au moins une rainure débouchante (4A, 4B) à sa dite extrémité et ledit élément tubulaire (1) présente au moins une languette (1A, 1B) emboîtée dans ladite rainure.

3. Capteur selon la revendication précédente, **caractérisé en ce que** ladite rainure débouchante (4A, 4B) est réalisée sur toute la longueur du dit corps cylindrique.

4. Capteur selon l'une des revendications précédentes, **caractérisé en ce que** ledit corps cylindrique (4) et ledit élément tubulaire (1) sont en céramique.

5. Capteur selon l'une des revendications précédentes, **caractérisé en ce que** ledit élément tubulaire (1) est fermé à son extrémité opposée à sa dite extrémité aboutée.

## Claims

1. Temperature sensor intended for mounting on a catalytic converter in an exhaust system for a motor vehicle comprising a thermistance element (2), a wiring element (3) connected to said thermistance element and intended to conduct its signal and a cylindrical body made of insulating material (4) containing said wiring element, a metal sleeve (5) sealed at one of its ends and a tubular element made of insulating material (1) covering said thermistance element, the assembly formed by the thermistance element, the wiring element, the cylindrical body and the tubular element assembled together being inserted into the metal sleeve (5), **characterized in that** said cylindrical body (4) and said tubular element (1) are butt-connected to one another by their ends and linked to one another by shape cooperation at their ends.

2. Sensor according to the preceding claim, **characterized in that** said cylindrical body (4) has at least one open-ended groove (4A, 4B) at its said end and said tubular element (1) has at least one tab (1A, 1B) fitted into said groove.

3. Sensor according to the preceding claim, **characterized in that** said open-ended groove (4A, 4B) is formed over the entire length of said cylindrical body.

4. Sensor according to one of the preceding claims, **characterized in that** said cylindrical body (4) and said tubular element (1) are made of ceramic.

5. Sensor according to one of the preceding claims, **characterized in that** said tubular element (1) is sealed at its end opposite to its said butt-connected end.

## Patentansprüche

1. Temperaturfühler, der dazu bestimmt ist, auf einen Katalysator in einem Auspuffsystem für ein Kraftfahrzeug montiert zu werden, mit einem Thermistorelement (2), einem Verkabelungselement (3), das mit dem Thermistorelement verbunden und dazu bestimmt ist, sein Signal zu leiten, und mit einem zylindrischen Körper aus Isolierstoff (4), der das Verkabelungselement enthält, wobei eine an einem ihrer Enden geschlossene metallische Hülse (5) und ein rohrförmiges Element aus Isolierstoff (1) das Thermistorelement bedecken, wobei die aus dem Zusammenbau des Thermistorelements, des Verkabelungselements, des zylindrischen Körpers und des rohrförmigen Elements bestehende Einheit in die metallische Hülse (5) eingefügt wird, **dadurch gekennzeichnet, dass** der zylindrische Körper (4) und das rohrförmige Element (1) über ihr Ende aneinandergefügt und durch Formzusammenwirkung an ihren Enden miteinander verbunden sind.

2. Fühler nach dem vorhergehenden Anspruch, **dadurch gekennzeichnet, dass** der zylindrische Körper (4) mindestens eine an seinem Ende mündende Nut (4A, 4B) und das rohrförmige Element (1) mindestens eine in die Nut eingesetzte Feder (1A, 1B) aufweist.

3. Fühler nach dem vorhergehenden Anspruch, **dadurch gekennzeichnet, dass** die mündende Nut (4A, 4B) über die ganze Länge des zylindrischen Körpers ausgeführt ist.

4. Fühler nach einem der vorhergehenden Ansprüche, **dadurch gekennzeichnet, dass** der zylindrische Körper (4) und das rohrförmige Element (1) aus Keramikmaterial sind.

5. Fühler nach einem der vorhergehenden Ansprüche, **dadurch gekennzeichnet, dass** das rohrförmige Element (1) an seinem seinem angefügten Ende gegenüberliegenden Ende geschlossen ist.
